## Europäisches Patentamt
## European Patent Office
## Office européen des brevets

(11) Veröffentlichungsnummer: **0 134 279**
**A1**

---

(12) **EUROPÄISCHE PATENTANMELDUNG**

(21) Anmeldenummer: **83108473.6**

(22) Anmeldetag: **29.08.83**

(51) Int. Cl.⁴: **G 11 B 23/02**

---

(43) Veröffentlichungstag der Anmeldung:
**20.03.85 Patentblatt 85/12**

(84) Benannte Vertragsstaaten:
**AT BE CH DE FR GB IT LI NL SE**

(71) Anmelder: **idn inventions and development of novelties ag**
**Hartbertstrasse 9**
**CH-7002 Chur(CH)**

(72) Erfinder: **Ackeret, Peter**
**Allmendstrasse 18**
**CH-8700 Küsnacht(CH)**

(74) Vertreter: **Dipl.-Ing. H. Marsch Dipl.-Ing. K. Sparing Dipl.-Phys.Dr. W.H. Röhl Patentanwälte**
**Rethelstrasse 123**
**D-4000 Düsseldorf(DE)**

---

(54) **Behälter zur Aufbewahrung von Magnetbandkassetten.**

(57) Bei bestimmten handelsüblichen Magnetbandkassetten liegen die Wickelnabenachsen versetzt zu einer Symmetrieebene der Kassette. Der erfindungsgemäße Behälter für solche Kassetten ermöglicht das beliebige Einlegen der Kassetten, da sich die Kassettennaben und die Bandwickelsperrnocken (86) beim Einlegen der Kassette selbst zentrieren. Zugleich werden die Naben festgehalten.

Fig. 3

EP 0 134 279 A1

## Behälter zur Aufbewahrung von Magnetbandkassetten.

Die Erfindung betrifft einen Behälter zur Aufbewahrung von Magnetbandkassetten mit den im Oberbegriff des Patentanspruchs 1 genannten Merkmalen. Ein derartiger Behälter ist aus der DE-C-22 48 408 bekannt.

Bei dem bekannten Behälter kann die übliche Kompaktkassette nur so eingelegt werden, daß ihr Kopfspiegel einer Schieberfrontplatte zugekehrt liegt. Versucht man, die Kassette in anderer Lage in den Behälter einzulegen, so paßt sie nicht. Wenn der Behälter in einem Kraftfahrzeug verwendet wird, kann dies zu Irritationen des Fahrers führen. Andererseits ist es aber gerade bei diesem Anwendungsfall geboten, die Bandwickelnaben in der Aufbewahrungsposition der Kassette zu blockieren, weil sonst die Kassette durch die Fahrterschütterungen beschädigt werden kann. Die asymmetrische Lage der Naben ist aber hinderlich bei der Gestaltung eines Behälters, in den die Kassette unabhängig von der Lage ihres Kopfspiegels einsetzbar sein soll.

Für dieses Problem bieten sich zwei Lösungen an. Die erste besteht darin, die Sperrnocken so schmal auszubilden, daß sie gerade noch in die Nabe eingreifen können; ein kleiner Sektor der Nabenöffnung liegt nämlich bei den handelsüblichen Kassetten in der Kassettenmittenebene. Nachteilig ist aber, daß die Sperrnocken dann sehr klein werden und leicht beschädigt werden können; außerdem können sie dann nicht die Naben sicher festhalten, sondern nur an der Drehung hindern, so daß Klappergeräusche entstehen können.

Die zweite Lösung besteht darin, daß einfach die Schieberabmessungen um die Strecke "2x" größer gewählt werden, so daß die Kassette in jeder Kopfspiegellage einlegbar ist. Nachteilig bei dieser Lösung ist, daß der 0134279
Benutzer die jeweils richtige Positionierung der Kassette
erst suchen muß, er also ebenfalls irritiert wird.

Aufgabe der Erfindung ist es, einen Behälter mit
den im Oberbegriff des Patentanspruchs 1 genannten Merkmalen derart auszubilden, daß er die Kassette unabhängig von der Kopfspiegelorientierung aufnehmen kann,
jedoch gleichwohl die Wickelnaben sicher arretiert und
festgehalten werden und der Benutzer nicht erst die
passende Kassettenorientierung suchen muß.

Die erfindungsgemäß vorgesehene Lösung dieser
Aufgabe ergibt sich durch die kennzeichnenden Merkmale
des Patentanspruchs 1. Sie beruht auf der Überlegung,
daß das Einlegen der Kassette in den gattungsgleichen
Behälter in zwei Phasen abläuft: Zunächst wird ein
Ende der Kassette in die Gehäuseöffnung eingesetzt,
wobei die Kassette schräg gehalten wird relativ zu
der Lage der Sperrnocken, und dann auf die Nocken
abgesenkt wird. Während dieser ersten Phase nun wird
die Kassette so geführt, daß ihre Wickelnabenöffnungen
entweder nach der einen oder der andern Seite versetzt
immerhin nahe genug dem freien Ende der Sperrnocken
positioniert sind, daß beide beim Absenken der Kassette
in Eingriff kommen. Durch die entsprechende Gestaltung
der Sperrnocken in Anpassung an die Form der Nabenkontur kann dabei eine Keilwirkung erzielt werden, die
dazu benutzt wird, Kassette und Sperrnocken relativ
zueinander um die erforderliche Strecke "x" zu versetzen.
Dabei können entweder die Nocken ausweichen, was es
sogar ermöglicht, den Schieber ohne die erwähnte Überdimensionierung auszubilden, oder aber die Kassette
kann von Federn geführt bezüglich der Nocken orientiert
werden und dann unter Auslenkung dieser Federn sich
einpassen.

Ausführungsbeispiele des Gegenstandes der Erfindung sind in den beigefügten Zeichnungen dargestellt und werden nachstehend im einzelnen erläutert.

Fig. 1 zeigt perspektivisch einen erfindungsgemäßen Behälter in einer ersten Ausführungsform,

Fig. 2 ist ein Teilvertikalschnitt des Behälters nach Fig. 1,

Fig. 3 bzw. 4 zeigen Horizontalschnitte eines geöffneten Einzelbehälters ohne bzw. mit eingelegter Kassette,

Fig. 5 zeigt einen Schnitt nach Linie 5-5 der Fig. 6, bei offenem Behälter,

Fig. 6 ist ein Horizontalschnitt analog zu Fig. 3, jedoch bei geschlossenem Behälter,

Fig. 7 dient der Erläuterung des Verriegelungssystems anhand einer Teildraufsicht auf das aufgebrochene Gehäuse,

Fig. 8 zeigt die Schieberführung im Querschnitt,

Fig. 9 bzw. 10 stellen analog zu Fig. 4 bzw. 3 eine abgewandelte Ausführungsform dar,

Fig.11 ist eine Teilansicht von unten auf den Schieber,

Fig.12 ist ein Schnitt nach Linie 12-12 der Fig.10,

Fig.13 stellt in Seitenansicht den Schieber einer weiteren Ausführungsform des erfindungsgemäßen Behälters dar,

Fig.14 zeigt eine Draufsicht auf diesen Schieber mit eingelegter Kassette,

Fig.15 zeigt schematisch die Einlegephase der Kassette,

Fig.16 zeigt bei einer weiteren Ausführungsform des Behälters nach der Erfindung im Horizontalschnitt den geöffneten Behälter,

Fig.17 ist ein entsprechender Vertikalschnitt,

Fig.18 ist eine Teilansicht von unten auf den Schieber aus Fig. 16 und 17,

Fig.19 ist ein Vertikalschnitt durch einen der Bandwickel-Sperrnocken,

Fig.20 zeigt, orthogonal zu Fig. 19 geschnitten, einen montierten Sperrnocken,

Fig.21 stellt perspektivisch ein Bauteil aus Fig. 16 und 17 dar,

Fig.22 zeigt im Querschnitt die Schieberführung.

Alle dargestellten Ausführungsformen sind so gestaltet, daß der Schieber sich in Richtung der längsten Kassettenkante bewegt; es versteht sich aber, daß das Prinzip der Erfindung ebenso auch bei solchen Behältern anwendbar ist, bei denen er sich parallel zur kürzeren Kassettenkante bewegt.

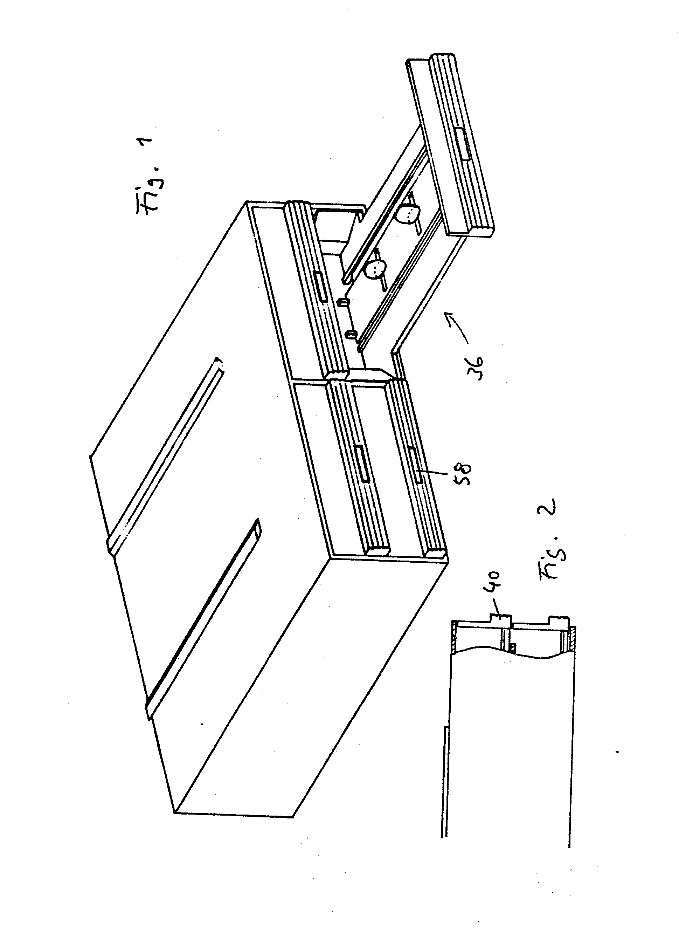

Fig. 1 und 2 zeigen einen Behälter für vier Kassetten, bei denen für jede Kassette ein Schieber vorgesehen ist, die in einem gemeinsamen Gehäuse untergebracht sind. In Fig. 1 sind drei Schieber geschlossen, einer geöffnet. Auf der Oberseite des Gehäuses erkennt man angeformte, hinterschnittene Stege, denen auf der Unterseite komplementäre Nuten zugeordnet sind; dies erlaubt in bekannter Weise ein Stapeln gleichartiger Behälter durch Formschlußverbindung.

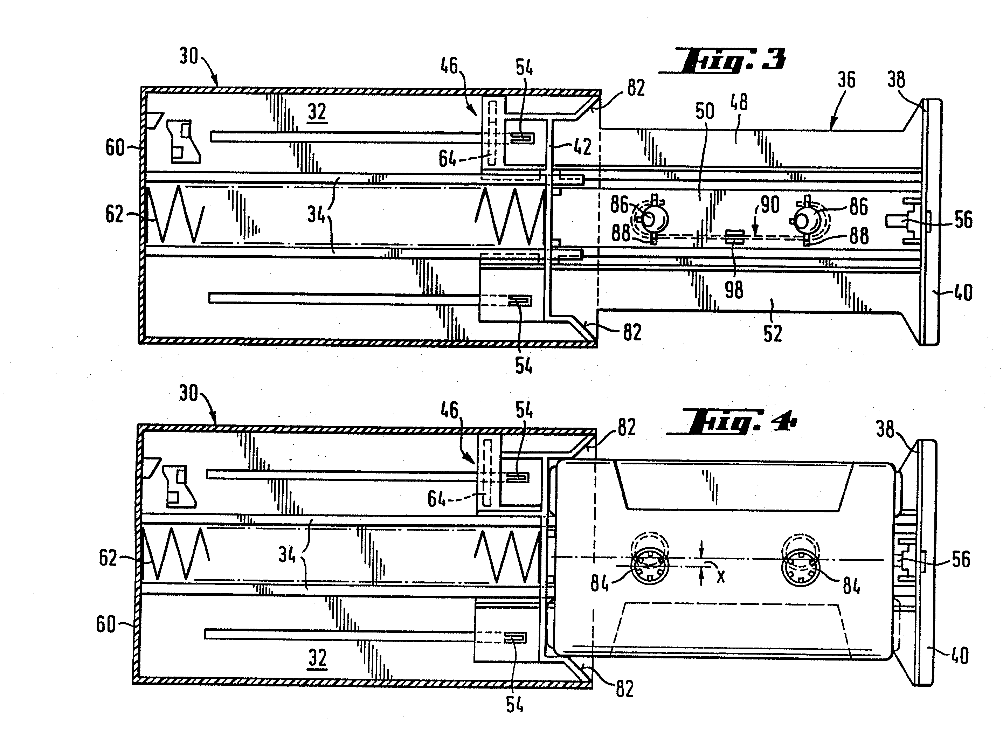

Der Aufbau des Behälters im einzelnen wird unter Bezugnahme auf Fig. 3 bis 8 erläutert, wobei jedoch zur Vereinfachung angenommen ist, daß jedem Schieber ein eigenes Gehäuse zugeordnet ist.

Das Gehäuse 30 ist quaderförmig und an einer kurzen Schmalseite offen. An den Gehäuseboden 32 sind innen Führungsschienen 34 angeformt (Fig. 8), längs denen der Schieber 36 geführt ist. Der Schieber weist eine Frontplatte 38 mit Tastleiste 40, eine Rückplatte 42 mit Führungswinkeln 44 und Riegelkäfig 46, sowie drei die Frontplatte mit der Rückplatte verbindende Bodenplatten 48, 50 und 52 auf. Zwischen benachbarten
Bodenplatten befindet sich jeweils ein mit den Gehäuseschienen ausgefluchteter Führungsschlitz. Von den beiden
äußeren Bodenplatten 48 und 52 erstreckt sich je eine
Anschlagnase 54 nach unten in eine  zugeordnete Gehäusebodenausnehmung, deren Endkante den Ausschubweg des
Schiebers begrenzt. Die Bodenplatten 48 und 52 sind
über die Rückplatte 42 hinaus verlängert, damit der
Schieber auch im ausgeschobenen Zustand noch sicher
geführt ist. In der Schieberfrontplatte ist ein Anzeigeorgan 56 angebracht, dessen Position durch Einlegen
einer Kassette verändert wird; dies läßt sich durch
ein entsprechendes Fenster 58 der Schieberfrontplatte
erkennen, so daß der Benutzer auch bei geschlossenem
Behälter feststellen kann, ob dieser eine Kassette enthält oder nicht.

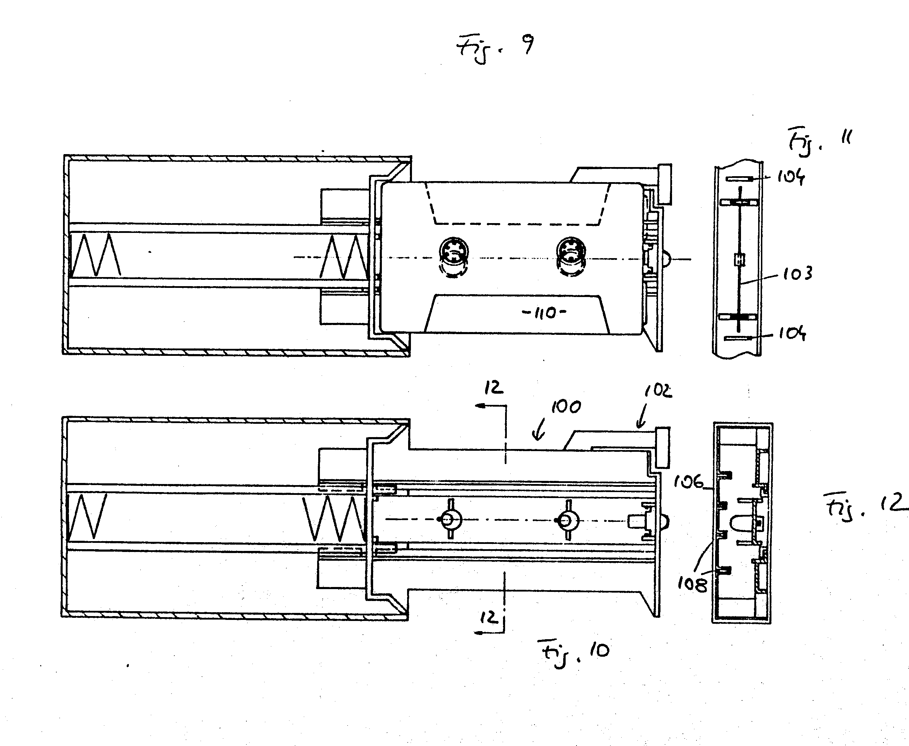

Zwischen der Gehäuserückwand 60 und der Schieberrückplatte 42 ist eine Schraubendruckfeder 62 eingespannt, die den Schieber nach manuellem Lösen einer
Verriegelung in die in Fig. 3 bis 5 dargestellte
Position schiebt. Die Verriegelung erfolgt mittels
eines Riegels 64, der in einem an den Schieber angeformten Riegelkäfig 46 quer zum Schieberweg gleit- und
kippbeweglich abgestützt ist. Sein Riegelfortsatz 66
(Fig. 7) trifft beim Einschieben des Schiebers auf
eine erste Führungskante 68 einer am Gehäuseboden an-
gef-ormten Kulisse, wird längs dieser Kante 68 in
Pfeilrichtung bis zu einer ersten Rampe 70 verschoben,
längs der Rampe aufwärts (vom Gehäuseboden weg) bewegt
und hinter der Kulisse durch Federvorspannung (nicht gezeigt)
nach unten gedrückt. Zugleich trifft der Schieber  auf
einen Endanschlag. Läßt man nun den Schieber los,
gleitet der Riegelfortsatz wieder in Pfeilrichtung
längs einer zweiten Führungskante 72 der Kulisse, bis
er an der Rastkante 74 stehenbleibt: Der Schieber ist
arretiert. Drückt man jetzt erneut auf die Schieberfrontplatte bis zum Endanschlag, trifft eine Steuerkante 76
an einem, an die Rückwand des Gehäuses angeformten Steuerwinkel 78 auf eine zugeordnete Steuerkante des Riegels 64 und drückt dessen Riegelfortsatz vor eine zweite Rampe 80, über die er federnd weggleiten kann, so daß der Schieber freigegeben und von der Feder 62 ausgeschoben wird.

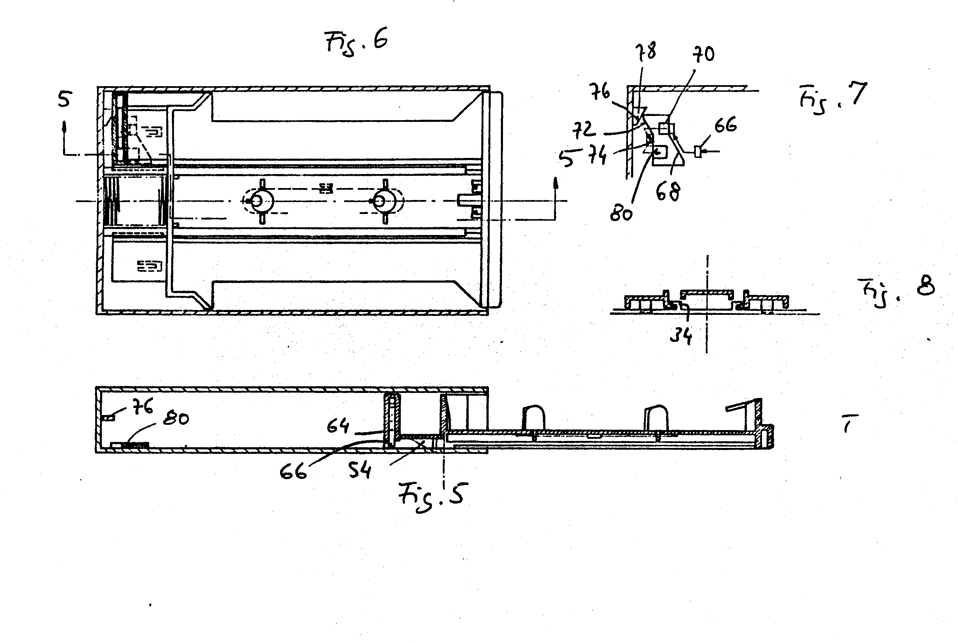

Wird in den Schieber, wie er sich geöffnet in Fig. 3 dargestellt präsentiert, eine Kassette eingeführt, so geschieht dies in Schräglage, da ihre dem Gehäuse zugewandte Kante unter dessen Öffnungskante geschoben werden muß, während ihr hinteres Ende oberhalb der Schieberfrontplatte liegt. Die dem Gehäuse zugewandte Kante trifft dabei, falls die Kassette nicht genau mittig geführt wird, auf eine der beiden schrägen Steuerflächen 82 an den Führungswinkeln 44 und wird auf diese Weise zentriert, wenn sie bis an die Schieberrückplatte geschoben wird. Ihre Wickelnabenöffnungen 84 nehmen dann, je nach der Lage des Kassettenkopfspiegels, die in Fig. 4 ausgezogen oder die gestrichelt gezeichnete Position ein. Die Sperrnocken 86 nehmen dabei noch ihre in Fig. 3 dargestellte mittlere Position ein, sind also nicht ausgefluchtet bezüglich der Wickelkernnaben der Kassetten. Die Mittenversetzung "x" von deren Achsen ist aber relativ gering, so daß beim Absenken der Kassette die an den Naben vorgesehenen Fasen sich auf den verjüngten Kopfabschnitt der Sperrnocken derart aufsetzen, daß durch Keilwirkung eine die Nocken seitlich verschiebende Kraft entwickelt wird. Tatsächlich können die Nocken diese Verschiebung ausführen, da sie in Schlitzen 88 geradegeführt sind. Im unbelasteten Zustand (Fig. 3) dagegen werden sie von einer Rückstellfeder 90 wieder in die zentrale Vorbereitungsposition geführt.

Die Konstruktion ist im Detail in Fig. 18 bis 20 dargestellt. An die Nocken 86 ist ein den Schlitz 88 im Schieber durchsetzender Führungssteg 92 mit Rastfortsätzen 94 angeformt, hinter die die Endschlaufen 96 der aus Draht gebogenen Feder 90 greifen. Die Feder ist mittig in eine an die Unterseite des Schiebers angeformte Stützgabel 98 eingeschnappt, die als Widerlager dient.

Wie man in Fig. 4 deutlich erkennen kann, läßt sich die Kassette sowohl in der mit ausgezogenen Linien dargestellten Position als auch in der gestrichelt angedeuteten Position bequem einlegen, wobei der Benutzer keinerlei besondere Handfertigkeit oder Aufmerksamkeit aufwenden muß, was besonders bei der Handhabung im fahrenden Kraftfahrzeug wichtig ist.

Die Ausführungsform gemäß Fig. 9 - 12 ist gegenüber der zuvor beschriebenen geringfügig abgewandelt, und nur diese Änderungen sollen erläutert werden.

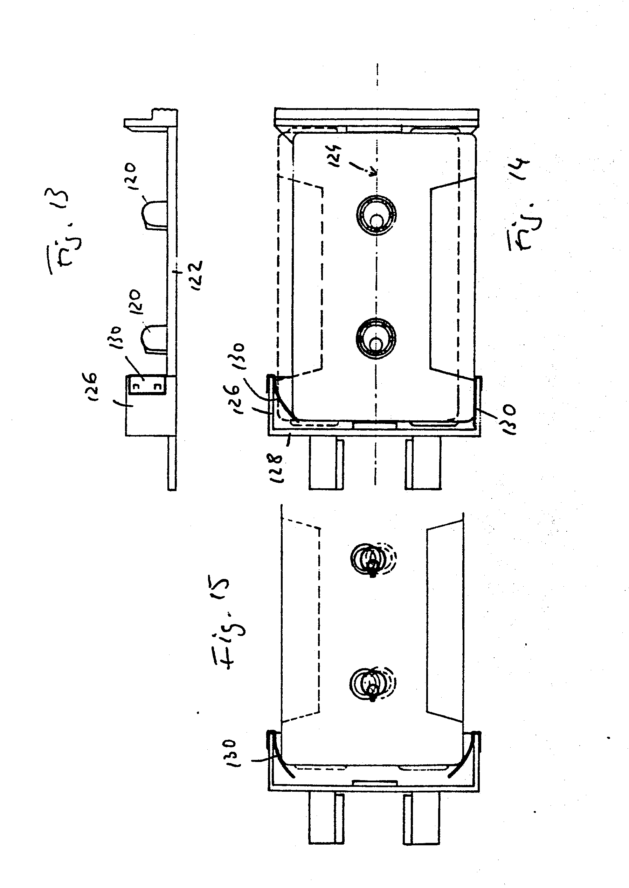

Der Verriegelungsmechanismus umfaßt hier eine an den Schieber 100 angeformte Taste 102, die federnd auslenkbar ist und dabei einen Verriegelungshaken (nicht gezeichnet) aus einer Gehäuseausnehmung hebt. Insoweit besteht Übereinstimmung mit dem Stand der Technik. Die Rückstellfeder 103 für die Sperrnocken ist hier einfach von geradem Federstahldraht abgelängt und durch mittige Löcher in dem Führungssteg der Nocken geschoben; an den Schieberboden unten angeformte Anschläge 104 verhindern ein Herausfallen der unter elastischer Deformation eingesetzten Feder 103.- Schließlich erkennt man noch in Fig. 12 an die Innenseite der Gehäusedeckwand 106 angeformte Kufen 108, die die Kassette in ihrem mittleren schlanken Teil niederhalten, während für die Verdickungen 110 der Kassetten seitlich davon Platz bleibt; entsprechend komplementär dazu ist auch eine Höhendifferenz für die Schieberbodenplatten vorgesehen.

Auf diese Weise wird die Kassette rüttelsicher im Gehäuse gehalten; die durch ihre Rückstellfeder 103 bzw. 90 (beim ersten Ausführungsbeispiel) in der Kassetteneinlegeposition vorgespannten Sperrnocken sorgen zusätzlich dafür, daß die Wickelnaben nicht nur sicher arretiert sind, sondern auch nicht klappern können.

0134279

Die Ausführungsform nach Fig. 13 - 15 stellt eine kinematische Umkehr der zuvor beschriebenen Konstruktionen dar. Die Sperrnocken 120 sind einstückig an die mittlere Schieberbodenplatte 122 angeformt, und zwar zentriert bezüglich der vertikalen Symmetrieebene 124. Der Schieber ist jedoch so breit, daß die Wickelnaben der Kassette sich auf die Sperrnocken setzen können, wobei dann allerdings die Kassette unsymmetrisch im Schieber zu liegen kommt. Um das Einsetzen zu vereinfachen, sind an Eckstücke 126, die sich von der Schieberrückplatte 128 nach vorn erstrecken, Führungsfedern 130 angeklipst. Führt der Benutzer die Kassette in den Schieber ein (Fig. 15), zentrieren die Federn 130 sie in ganz derselben Weise, wie dies in Fig. 4 durch die Steuerflächen 82 bewirkt wird. Beim Absenken der Kassette folgen hier aber nicht die Sperrnocken, sondern eine der Führungsfedern 130 weicht aus (Fig. 14).

Die insoweit beschriebenen Ausführungsbeispiele sind in der Handhabung besonders bequem, weil die Breite der Aufnahmeräume im Schieber relativ zur entsprechenden Kassettenabmessung überdimensioniert ist und der Benutzer nur ungefähr zu "zielen" braucht, um die Kassette einzulegen. Diese Überdimensionierung kostet andererseits Platz und Material. Wenn dieser letztere Gesichtspunkt bedeutungsvoll ist, wird man die letzte Ausführungsform nach Figuren 16 - 22 bevorzugen.

Das Gehäuse 200 ist in seiner Breite gerade so bemessen, daß eine Kassette in Längsrichtung hineinpaßt. Längs seinen Bodenschienen 202 ist die Schieberbodenplatte 204 -- dieser Schieber besitzt nur diese eine Bodenplatte -- zwischen Anschlägen geführt. In die Schieberrückplatte 206 ist der Riegel des Verriegelungsmechanismus (entsprechend der Ausführungsform nach Fig. 1 - 8) eingesetzt, und zwar mittig, und die Lage der Kulisse und des Steuerwinkels am Gehäuse sind entsprechend gewählt. Der Steuerwinkel 208 greift dabei durch die Ausschubfeder 210. Von oben ist auf die Rückplatte 206 eine Blechfeder aufgeklipst, deren

0134279

Federarm 212 die Kassette nach vorn in Anlage gegen die Frontplatte 214 des Schiebers drückt. Die Sperrnocken können seitlich federnd ausweichen, wie oben unter Bezugnahme auf die ersten beiden Ausführungsbeispiele erläutert.

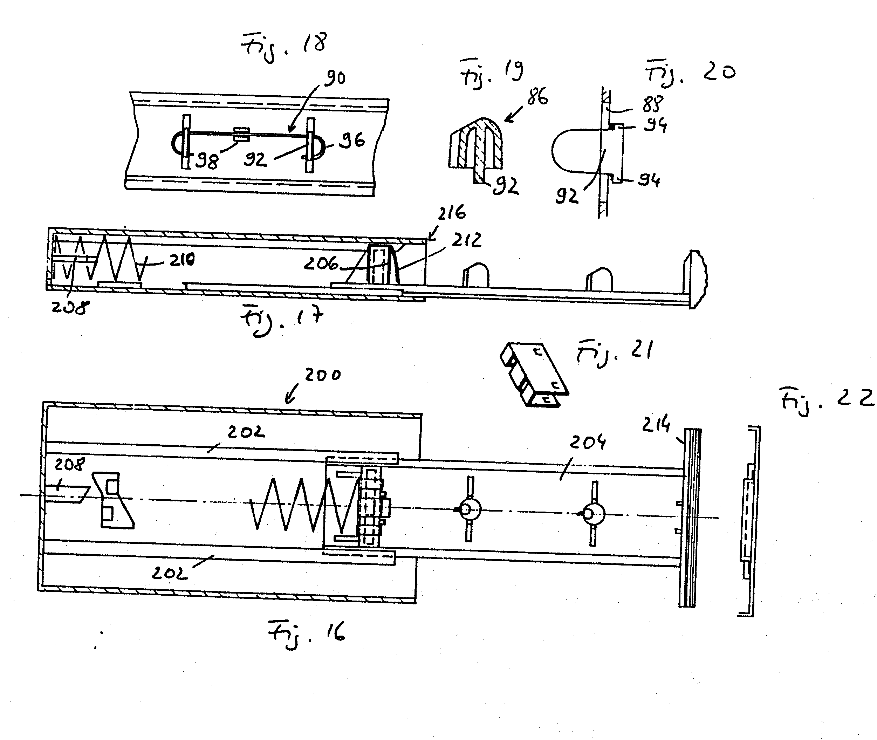

Für die Verwendung dieses Behälters in Kraftfahrzeugen ist es vorteilhaft, wenn die Frontplatte 214 des Schiebers eine Kontur gemäß Fig. 17 aufweist, bei der im geschlossenen Zustand des Behälters die scharfen Endkanten 216 der Gehäuseöffnung von der selbst abgerundeten Frontpartie des Schiebers schützend abgedeckt sind.

P a t e n t a n s p r ü c h e

1) Behälter zur Aufbewahrung von Magnetbandkassetten, deren Bandwickelnaben um eine Strecke "x" versetzt zu einer Mittelebene der Kassette liegen (z.B. Kompaktkassetten), mit einem Gehäuse und einem zwischen einer inneren Aufbewahrungsposition und einer äußeren Entnahmeposition durch eine Gehäuseöffnung verschieblichen Transportschieber, welcher Bandwickelsperrnocken trägt, die in die Bandwickelnaben einer eingelegten Kassette eingreifen, um diese zu blockieren, d a d u r c h g e k e n n z e i c h n e t , daß am Gehäuse (oder am Schieber) Führungen für die Kassette vorgesehen sind, mittels denen die Kassette beim Einlegen in den Schieber in eine Position oberhalb der Sperrnocken zentrierbar ist, in der eine Fase am Nockenende von einer Gegenfase der Bandwickelnaben beim Annähern der Kassette erfaßbar ist, und daß beim Aufsetzen der Kassette auf die so erfaßten Sperrnocken diese selbst oder die genannten Führungen um die Strecke "x" versetzbar sind.

2) Behälter nach Anspruch 1, dadurch gekennzeichnet, daß die Führungen starr sind und die Sperrnocken aus einer Mittelposition nach beiden Seiten um die Strecke "x" versetztbar sind.

3) Behälter nach Anspruch 2, dadurch gekennzeichnet, daß die Führungen von Gehäusewandungen gebildet sind.

4) Behälter nach Anspruch 2, dadurch gekennzeichnet, daß die Führungen von an den Schieber angeformten Schrägflächen gebildet sind.

5) Behälter nach Anspruch 2, dadurch gekennzeichnet, daß die Sperrnocken in Gleitführungen am Schieberboden geführt sind.

∪134279

6) Behälter nach Anspruch 2, dadurch gekennzeichnet, daß die Sperrnocken von einer Rückstellfeder in ihre mittlere Position vorgespannt sind.

7) Behälter nach Anspruch 5 und 6, dadurch gekennzeichnet, daß die Rückstellfeder eine Drahtfeder ist, die auf einer den Sperrnocken abgewandten Seite des Schieberbodens an den Sperrnocken verankert ist und sich am Schieberboden abstützt.

8) Behälter nach Anspruch 5, dadurch gekennzeichnet, daß die Gleitführungen Geradführungen sind.

9) Behälter nach Anspruch 1, dadurch gekennzeichnet, daß die Sperrnocken einstückig mit dem Schieber starr verbunden sind und die Führungen von seitlich ausweichenden Federn gebildet sind.

10) Behälter nach Anspruch 1, dadurch gekennzeichnet, daß die Sperrnocken im Schieber in dessen Bewegungsrichtung hintereinander angeordnet sind.

11) Behälter nach Anspruch 4 und Anspruch 10, dadurch gekennzeichnet, daß die Schrägflächen im Bereich einer in der Schieberaufbewahrungsposition im Gehäuse verbleibenden Schieberrückplatte vorgesehen sind.

12) Behälter nach Anspruch 9 und Anspruch 10, dadurch gekennzeichnet, daß die seitlich ausweichenden Federn im Bereich einer in der Schieberaufbewahrungsposition im Gehäuse verbleibenden Schieberrückplatte vorgesehen sind.

13) Behälter nach Anspruch 1, bei dem der Schieber längs Schienen geführt ist, die am Gehäuseboden vorgesehen sind, dadurch gekennzeichnet, daß der Schieber im Bereich einer Mittelebene zwischen den Schienen eine Bodenplatte aufweist, auf der die Sperrnocken angeordnet sind.

Fig. 1

Fig. 2

36

58

40

0134279

Fig. 3

Fig. 4

Fig. 6

Fig. 7

Fig. 8

Fig. 9

Fig. 10

Fig. 11

Fig. 12

Fig. 13

Fig. 14

Fig. 15

0134279

Fig. 18

90

98 92 96

Fig. 19

86

92

Fig. 20

88
94

92 94

216
212

210

206

208

Fig. 17

Fig. 21

200

Fig. 22

202

208

204 214

202

Fig. 16

Europäisches
Patentamt

**EUROPÄISCHER RECHERCHENBERICHT**

Q134279
Nummer der Anmeldung

EP  83 10 8473

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl ³) |
|---|---|---|---|
| A | DE-A-2 556 609  (STAAR) <br> * Seite 4, letzter Absatz - Seite 5, letzter Absatz; Figuren 1, 2 * | 1,9 | G 11 B  23/02 |
| | --- | | |
| A | DE-B-1 797 278  (PHILIPS) <br> * Spalte 4, Zeilen 29-67; Figuren 1, 2 * | 1 | |
| | --- | | |
| A | US-A-4 191 292  (SCHWEIZER) <br><br> * Spalte 4, Zeilen 38-64; Figuren 1, 5 * | | |
| | ----- | | |

**RECHERCHIERTE SACHGEBIETE (Int. Cl. ³)**

B 65 D  85/00
G 11 B   1/00
G 11 B  23/00

Der vorliegende Recherchenbericht wurde für alle Patentansprüche erstellt.

| Recherchenort <br> BERLIN | Abschlußdatum der Recherche <br> 30-03-1984 | Prüfer <br> WIBERGH S.R. |
|---|---|---|